# EUROPÄISCHE PATENTSCHRIFT

(11) **EP 2 628 623 B1**
(45) Veröffentlichungstag und Bekanntmachung des Hinweises auf die Patenterteilung: **30.11.2016**
(21) Anmeldenummer: 12155505.6
(22) Anmeldetag: 15.02.2012
(51) Int. Cl.: B60K 15/077, B60K 15/03

(54) **KRAFTSTOFFTANKVORRICHTUNG FÜR EIN NUTZFAHRZEUG**
FUEL TANK DEVICE FOR A COMMERCIAL VEHICLE
DISPOSITIF DE RÉSERVOIR DE CARBURANT POUR UN VÉHICULE UTILITAIRE

(43) Veröffentlichungstag der Anmeldung: 21.08.2013
(73) Patentinhaber: Magna Steyr Fuel Systems GesmbH, 8261 Sinabelkirchen (AT)
(72) Erfinder: Pozgainer, Günther, 8045 Graz (AT)
(74) Vertreter: Zangger, Bernd

(56) Entgegenhaltungen:
- EP-A1- 1 470 944
- EP-A2- 0 976 602
- WO-A1-2005/042292
- DE-A1- 10 303 390
- DE-A1- 19 619 933
- DE-A1-102007 039 861
- DE-A1-102009 036 261
- US-A1- 2005 051 141

## Beschreibung

Die vorliegende Erfindung betrifft eine Kraftstofftankvorrichtung für ein Nutzfahrzeug.

Derartige Vorrichtungen sind beispielsweise aus der DE 10 2007 040 416 A1 oder der DE 10 2009 045 500 A1 bekannt.

Aus der DE 196 19 933 A1 ist eine Kraftstofftankvorrichtung bekannt, umfassend einen Kraftstofftank, ein Kraftstoffreservoir, das im Inneren des Kraftstofftanks angeordnet ist, eine Entnahmeeinheit, die dazu eingerichtet ist, Kraftstoff aus dem Kraftstoffreservoir zu entnehmen und einer Antriebseinheit zuzuführen, ein Einfüllrohr, das sich von einem Einfüllstutzen in den Kraftstofftank erstreckt, eine Pumpe, die außerhalb des Kraftstoffreservoirs im Kraftstofftank angeordnet und dazu eingerichtet ist, über eine erste Zuführleitung Kraftstoff aus dem Kraftstofftank in das Kraftstoffreservoir zu fördern, und eine im Wesentlichen vertikal angeordnete Schwallwand, die außerhalb des Kraftstoffreservoirs und innerhalb des Kraftstofftanks angeordnet ist, wobei die Pumpe in einem Bereich des Kraftstofftanks angeordnet ist, der durch die Schwallwand vom Kraftstoffreservoir getrennt ist.

Kraftstofftankvorrichtungen für Nutzfahrzeuge sind üblicherweise größer dimensioniert als Kraftstofftanks von Personenkraftwagen, oft in länglichen Formen, wie zum Beispiel in Zylinderform ausgebildet, und umfassen oft Schwallwände im Inneren des Kraftstofftanks. Derartige Schwallwände sind üblicherweise in Einbaulage vertikal angeordnete Wände mit Durchgangslöchern, die dazu eingerichtet sind, ein Strömen von Kraftstoff von einer Seite der Schwallwand zur anderen Seite der Schwallwand zwar zu ermöglichen, jedoch das Ausmaß derartiger Strömungen -die insbesondere bei Berg- und Talfahrt oder Kurvenfahrt vermehrt auftreten- zu reduzieren.

Aufgrund der großen Dimensionen und länglichen Form von Nutzfahrzeugtanks und der verwendeten Schwallwände und insbesondere bei Berg- und Talfahrten oder Kurvenfahrten gelangt der Kraftstoff oft nur ungenügend in den Bereich des Kraftstofftanks, in dem der Kraftstoff von einer Kraftstoffpumpe abgesaugt und einer Antriebseinheit des Nutzfahrzeuges zugeführt werden kann. Dadurch ist eine große Menge an Kraftstoff erforderlich um eine zuverlässige Entnahme und beispielsweise zuverlässige Inbetriebnahme der Antriebseinheit zu gewährleisten. Weiters verbleibt eine große Restmenge an nicht nutzbarem Kraftstoff im Kraftstofftank eines Nutzfahrzeugs. Das Nutzfahrzeug muss daher unnötig oft betankt werden.

Es ist eine Aufgabe der Erfindung, Kraftstofftankvorrichtungen für Nutzfahrzeuge in dieser Hinsicht zu verbessern und insbesondere den nicht nutzbaren Anteil von Kraftstoff im Kraftstofftank zu reduzieren.

Die Lösung der Aufgabe erfolgt durch eine Kraftstofftankvorrichtung gemäß Anspruch 1.

Erfindungsgemäß ist vorgesehen, ein Kraftstoffreservoir im Inneren des Kraftstofftanks anzuordnen, in welches Kraftstoff aus dem umgebenden Kraftstofftank relativ ungehindert einströmen, aber nicht oder kaum wieder ausströmen kann. Ein derartiges Kraftstoffreservoir wird auch als Schwalltopf bezeichnet. Aus dem Schwalltopf wird der Kraftstoff über eine Entnahmeeinheit der Antriebseinheit des Nutzfahrzeuges, also dessen Motor zugeführt. Zur Befüllung des Kraftstoffreservoirs dient nicht nur das Einströmmittel, das beispielsweise ein Pilzventil sein kann, sondern auch zumindest eine Pumpe, beispielsweise eine Saugstrahlpumpe, die jenseits einer Schwallwand angeordnet ist und so den Kraftstoff aus diesem vom Kraftstoffreservoir abgelegenen Bereich in das Kraftstoffreservoir fördern kann. Weiters umfasst die Kraftstofftankvorrichtung ein Einfüllrohr, das sich von einem Einfüllstutzen des Kraftstofftanks bis zum Kraftstoffreservoir erstreckt und dazu eingerichtet ist, eine direkte Befüllung des Kraftstoffreservoirs von außerhalb des Kraftstofftanks zu ermöglichen. Hierdurch gelangt bereits zum Zeitpunkt der Befüllung der Kraftstoff in das Kraftstoffreservoir, von wo er von der Entnahmeeinheit entnehmbar und nutzbar ist. Insbesondere zum Zeitpunkt der Erstbetankung oder bei einer Notbetankung aus einem Reservekanister ist es daher ausreichend, der Kraftstofftankvorrichtung eine geringe Menge von Kraftstoff zuzuführen, um vorerst das Kraftstoffreservoir zu befüllen und die Fahrt mit dem Nutzfahrzug zu ermöglichen.

Erfindungsgemäß gelangt also Kraftstoff sowohl über das Einströmmittel aus der Umgebung des Kraftstoffreservoirs, als auch über die erste Pumpe aus einem Bereich jenseits einer ersten Schwallwand und über das Einfüllrohr von außerhalb des Kraftstofftanks direkt in das Kraftstoffreservoir, von wo der Kraftstoff der Antriebseinheit zugeführt werden kann.

Dadurch, dass zumindest zwei Schwallwände eingesetzt werden, um die Schwallströmungen gut zu reduzieren, befinden sich die Schwallwände vorteilhaft beiderseits des Kraftstoffreservoirs, so dass zu beiden Seiten des Kraftstoffreservoirs eine Reduktion von Schwallbewegungen des Kraftstoffes stattfindet.

Durch die Verwendung einer zweiten, und eventuell weiterer zusätzlicher Pumpen kann Kraftstoff aus weiteren abgelegenen Bereichen des Kraftstofftanks in das Kraftstoffreservoir befördert werden. So können alle Restmengen an Kraftstoff aus dem Kraftstofftank abgesaugt und genutzt werden.

Durch den Einsatz von zwei Pumpen und zwei Schwallwänden sind also vorteilhaft die Schwallwände beiderseits des Kraftstoffreservoirs angeordnet und die Pumpen wiederum außerhalb der beiden Schwallwände. So wird durch beide Pumpen der Kraftstoff aus abgelegenen und durch Schwallwände vom Kraftstoffreservoir getrennten Bereichen in das Kraftstoffreservoir befördert.

Weiterbildungen der Erfindung sind in den abhängigen Ansprüchen, der Beschreibung sowie den beigefügten Zeichnungen angegeben.

Vorteilhaft ist das Einströmmittel im Bereich des Bodens des Kraftstoffreservoirs angeordnet. Kraftstoff kann so bereits dann in das Kraftstoffreservoir einströmen wenn dessen Niveau die geringe Höhe des Bodens des Kraftstoffreservoirs erreicht.

Bevorzugt ist das Einströmmittel ein Pilzventil.

In einer Ausführungsform ist die erste Pumpe im Bereich des Bodens des Kraftstofftanks angeordnet. So können geringe Mengen an Kraftstoff die sich im Bereich des Bodens des Kraftstofftanks sammeln abgesaugt und dem Kraftstoffreservoir zugeführt werden.

Gemäß einer Ausführungsform der Erfindung ist der Kraftstofftank von einer ersten Stirnwand begrenzt, die in Einbaulage normal zur Fahrtrichtung angeordnet ist, und die erste Pumpe ist nahe der ersten Stirnwand angeordnet. Die Pumpe zur Förderung von Kraftstoff in das Kraftstoffreservoir ist also in einem Randbereich des Kraftstofftanks angebracht, sodass Kraftstoff aus dem außen liegenden, beispielsweise vom Kraftstoffreservoir weit entfernten Bereich in das Kraftstoffreservoir gefördert werden kann.

Vorzugsweise ist die erste Pumpe eine Saugstrahlpumpe.

Bevorzugt ist auch die zweite Pumpe im Bereich des Bodens des Kraftstofftanks angeordnet.

Bevorzugt ist auch die zweite Pumpe eine Saugstrahlpumpe.

In einer Ausführungsform der Erfindung ist der Kraftstofftank an dessen der ersten Stirnwand gegenüberliegenden Seite durch eine zweite Stirnwand begrenzt, die in Einbaulage, wie auch die erste Stirnwand, normal zur Fahrtrichtung angeordnet ist, und die zweite Pumpe ist nahe der zweiten Stirnwand angeordnet. Dadurch wird auch die zweite Pumpe in einem abgelegenen, äußeren Bereich des Kraftstofftanks angeordnet und zwar in einem Bereich der von der ersten Pumpe weit entfernt liegt. Wenn mehrere Saugstrahlpumpen zur Rückführung des Kraftstoffes in das Kraftstoffreservoir verwendet werden, werden diese bevorzugt an verschiedenen, insbesondere entlegenen Bereichen des Kraftstofftanks verteilt, um Kraftstoff aus allen Bereichen des Kraftstofftanks in das Kraftstoffreservoir führen zu können.

In einer Ausführungsform umfasst die Entnahmeeinheit eine Kraftstoffpumpe und die erste Pumpe ist über die Kraftstoffpumpe der Entnahmeeinheit antreibbar. Die Kraftstoffpumpe die den Kraftstoff zur Antriebseinheit fördert wird daher auch für die Absaugung von Kraftstoff aus dem Kraftstofftank in das Kraftstoffreservoir verwendet.

Die Kraftstoffpumpe kann dabei eine elektrische Kraftstoffpumpe sein, die insbesondere im oder am Kraftstoffreservoir angeordnet ist. Die Kraftstoffpumpe kann auch in der Antriebseinheit, also dem Motor des Nutzfahrzeuges integriert sein.

Bevorzugt umfasst die Entnahmeeinheit eine Rücklaufleitung, über welche von der Entnahmeeinheit dem Kraftstoffreservoir entnommener Kraftstoff in das Kraftstoffreservoir rückführbar ist.

Gemäß einer Ausführungsform ist die erste Pumpe über die Rücklaufleitung der Entnahmeeinheit betreibbar. Der rücklaufende Kraftstoff wird also zum Betrieb der ersten Pumpe, insbesondere bei Ausführung als Saugstrahlpumpe, verwendet.

Gemäß einer weiteren Ausführungsform ist die erste Pumpe über die Vorlaufleitung der Entnahmeeinheit betreibbar. Der Kraftstoff der aus dem Kraftstoffreservoir abgesaugt und der Antriebseinheit zugeführt wird, wird auch zum Betrieb der ersten Pumpe, insbesondere bei Ausführung als Saugstrahlpumpe, verwendet.

Gemäß einer bevorzugten Ausgestaltung der Erfindung ist das Kraftstoffreservoir an der ersten Schwallwand befestigt. Die Schwallwand wird dadurch zur Fixierung des Kraftstoffreservoirs genutzt. Der Einbau des Kraftstoffreservoirs in den Kraftstofftank wird dadurch erleichtert, da das Kraftstoffreservoir zusammen mit der Schwallwand in den Kraftstofftank eingeschoben werden kann. Durch die Befestigung des Kraftstoffreservoirs die vorteilhaft ausschließlich an der Schwallwand erfolgt, sind keine weiteren Befestigungsmittel zur Befestigung beispielsweise am Boden des Kraftstofftanks erforderlich. Dadurch werden Beschädigungen bzw. Schwachstellen an der Wandung des Kraftstofftanks vermieden. Die Dauerfestigkeit wird durch die Befestigung an der Schwallwand deutlich erhöht.

Die Erfindung wird im Folgenden beispielhaft unter Bezugnahme auf die Zeichnungen beschrieben.
- Fig. 1: ist eine schematische Darstellung einer erfindungsgemäßen Kraftstofftankvorrichtung.
- Fig. 2: ist eine schematische Darstellung einer weiteren erfindungsgemäßen Kraftstofftankvorrichtung.

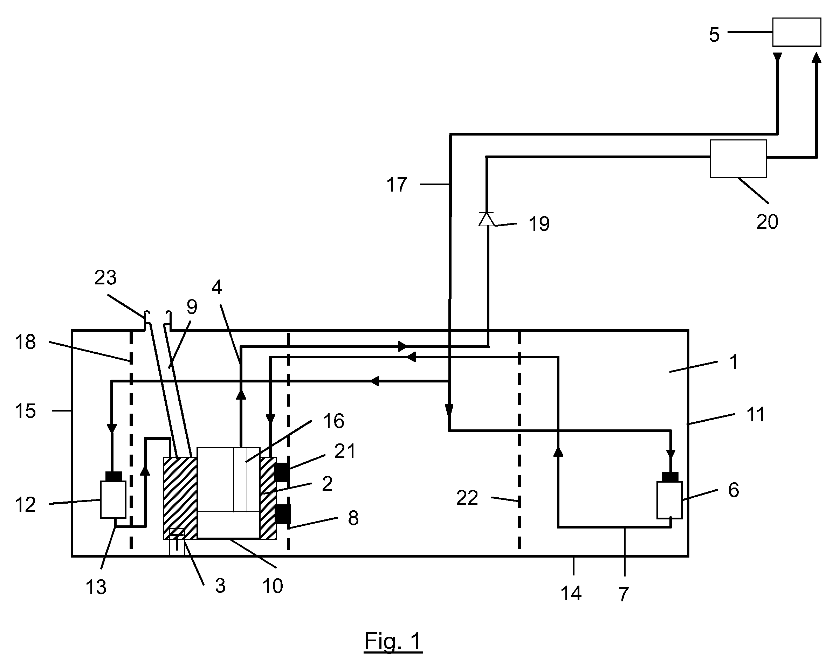

In der Fig. 1 ist eine erfindungsgemäße Kraftstofftankvorrichtung dargestellt, mit einem Kraftstofftank 1 in dem sich ein Kraftstoffreservoir 2 als sog. Schwalltopf befindet. Aus dem Kraftstoffreservoir 2 wird Kraftstoff über eine Entnahmeeinheit 4 zu einer Antriebseinheit 5 befördert. Die Entnahmeeinheit 4 umfasst eine Kraftstoffpumpe 16, die in dieser Ausführung im Kraftstoffreservoir angeordnet ist und eine Vorlaufleitung zur Leitung des Kraftstoffes in die Antriebseinheit 5. Die Vorlaufleitung ist mit einem Rückschlagventil 19 und einem Filter 20 vor der Antriebseinheit 5 ausgestattet. Von der Antriebseinheit 5 führt eine Rücklaufleitung 17 wieder zurück in das Kraftstoffreservoir 2. Abzweigungen der Rücklaufleitung 17 führen zu den Saugstrahlpumpen 6 und 12 und treiben so die Absaugung von Kraftstoff aus der Umgebung der Saugstrahlpumpen 6 und 12 im Kraftstofftank 1 an. Der abgesaugte Kraftstoff wird über erste und zweite Zuführleitungen 7 und 13 zurück in das Kraftstoffreservoir 2 geführt.

Das Kraftstoffreservoir 2 weist im Bereich seines Bodens 10 ein Pilzventil als Einströmmittel 3 auf, durch das Kraftstoff aus dem umgebenden Kraftstofftank 1 in das Kraftstoffreservoir 2 gelangt, jedoch nicht umgekehrt.

Im Kraftstofftank 1 sind drei Schwallwände 8, 18, 22 angeordnet. Davon ist eine erste Schwallwand 8, in der Darstellung rechts direkt neben dem Kraftstoffreservoir 2 angeordnet. Das Kraftstoffreservoir 2 ist an der ersten Schwallwand 8 befestigt. Die Befestigung des Kraftstoffreservoirs 2 an der ersten Schwallwand 8 erfolgt mit Hilfe von Befestigungsmitteln 21. Die erste Pumpe 6 ist vom Kraftstoffreservoir 2 aus gesehen jenseits der ersten Schwallwand 8 angeordnet.

Zusätzlich umfasst die in Fig. 1 dargestellte Kraftstofftankvorrichtung eine zweite Pumpe 12, die vom Kraftstoffreservoir 2 durch eine zweite Schwallwand 18 getrennt ist. Die beiden Pumpen 6, 12, die als Saugstrahlpumpen ausgebildet sind, sind in Nähe des Bodens 14 des Kraftstofftanks 1 weit über die Fläche des Kraftstofftanks 1 verteilt angeordnet, so dass die erste Pumpe 6 nahe der ersten Stirnwand 11 und die zweite Pumpe 12 nahe der zweiten Stirnwand 15 angeordnet ist.

Das Kraftstoffreservoir 2 ist von außen über ein Einfüllrohr 9 direkt befüllbar. Das Einfüllrohr 9 reicht an dessen oberen Ende in einen Einfüllstutzen 23, der zur Betankung mit Hilfe eines Zapfventils eingerichtet ist.

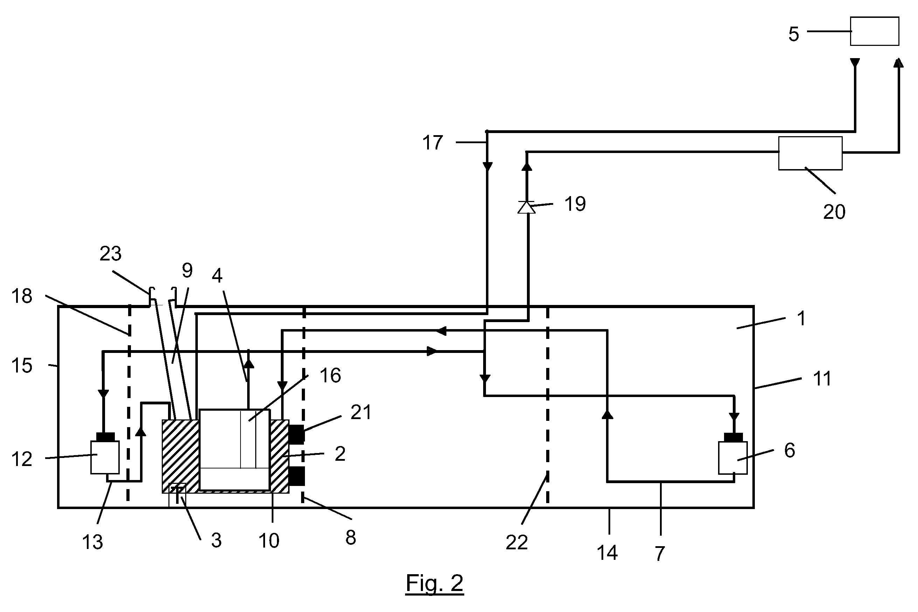

Die in Fig. 2 dargestellte Ausführungsform der Erfindung unterscheidet sich von der Ausführungsform der Fig. 1 dadurch, dass die Pumpen 6 und 12 nicht über die Rücklaufleitung 17 angetrieben werden, sondern jeweils über Abzweigungen aus dem Vorlauf der Entnahmeeinheit 4. Die Rücklaufleitung 17 führt in diesem Fall ausschließlich zurück in das Kraftstoffreservoir 2.

Die Erfindung gibt somit eine Kraftstofftankvorrichtung für Nutzfahrzeuge an, durch welche der nicht nutzbare Anteil von Kraftstoff im Kraftstofftank reduziert wird.

### Bezugszeichenliste

- 1: Kraftstofftank
- 2: Kraftstoffreservoir
- 3: Einströmmittel
- 4: Entnahmeeinheit
- 5: Antriebseinheit
- 6: erste Pumpe
- 7: erste Zuführleitung
- 8: erste Schwallwand
- 9: Einfüllrohr
- 10: Boden des Kraftstoffreservoirs
- 11: erste Stirnwand
- 12: zweite Pumpe
- 13: zweite Zuführleitung
- 14: Boden des Kraftstofftanks
- 15: zweite Stirnwand
- 16: Kraftstoffpumpe
- 17: Rücklaufleitung
- 18: zweite Schwallwand
- 19: Rückschlagventil
- 20: Filter
- 21: Befestigungsmittel
- 22: dritte Schwallwand
- 23: Einfüllstutzen

## Patentansprüche

1. Kraftstofftankvorrichtung für ein Nutzfahrzeug,
umfassend
- einen Kraftstofftank (1),
- ein Kraftstoffreservoir (2), das im Inneren des Kraftstofftanks (1) angeordnet ist, wobei an dem Kraftstoffreservoir (2) ein Einströmmittel (3) angeordnet ist, das dazu eingerichtet ist, ein Einströmen von Kraftstoff aus dem Kraftstofftank (1) in das Kraftstoffreservoir (2) zu ermöglichen, ein Ausströmen von Kraftstoff aus dem Kraftstoffreservoir (2) in den Kraftstofftank (1) aber zu behindern,
- eine Entnahmeeinheit (4), die dazu eingerichtet ist, Kraftstoff aus dem Kraftstoffreservoir (2) zu entnehmen und einer Antriebseinheit (5) zuzuführen,
- ein Einfüllrohr (9), das sich von einem Einfüllstutzen (23) bis zum Kraftstoffreservoir (2) erstreckt und dazu eingerichtet ist, eine direkte Befüllung des Kraftstoffreservoirs (2) von außerhalb des Kraftstofftanks (1) zu ermöglichen,
- eine erste Pumpe (6), die außerhalb des Kraftstoffreservoirs (2) im Kraftstofftank (1) angeordnet ist und dazu eingerichtet ist, über eine erste Zuführleitung (7) Kraftstoff aus dem Kraftstofftank (1) in das Kraftstoffreservoir (2) zu fördern,
- eine erste im Wesentlichen vertikal angeordnete Schwallwand (8), die außerhalb des Kraftstoffreservoirs (2) und innerhalb des Kraftstofftanks (1) angeordnet ist, wobei die erste Pumpe (6) in einem Bereich des Kraftstofftanks (1) angeordnet ist, der durch die erste Schwallwand (8) vom Kraftstoffreservoir (2) getrennt ist,
- eine zweite im Wesentlichen vertikal angeordnete Schwallwand (18), die außerhalb des Kraftstoffreservoirs (2) und innerhalb des Kraftstofftanks (1) angeordnet ist, wobei das Kraftstoffreservoir (2) zwischen der ersten Schwallwand (8) und der zweiten Schwallwand (18) angeordnet ist,
- eine zweite Pumpe (12), die außerhalb des Kraftstoffreservoirs (2), im Kraftstofftank (1) angeordnet ist und dazu eingerichtet ist, über eine zweite Zuführleitung (13) Kraftstoff aus dem Kraftstofftank (1) in das Kraftstoffreservoir (2) zu fördern, wobei
- die zweite Pumpe (12) in einem Bereich des Kraftstofftanks (1) angeordnet ist, der durch die zweite Schwallwand (18) vom Kraftstoffreservoir (2) getrennt ist.

2. Kraftstofftankvorrichtung nach Anspruch 1,
**dadurch gekennzeichnet, dass** das Einströmmittel (3) im Bereich des Bodens (10) des Kraftstoffreservoirs (2) angeordnet ist.

3. Kraftstofftankvorrichtung nach Anspruch 1,
**dadurch gekennzeichnet, dass** das Einströmmittel (3) ein Pilzventil ist.

4. Kraftstofftankvorrichtung nach Anspruch 1,
**dadurch gekennzeichnet, dass** die erste Pumpe (6) im Bereich des Bodens (14) des Kraftstofftanks (1) angeordnet ist.

5. Kraftstofftankvorrichtung nach Anspruch 1,
**dadurch gekennzeichnet, dass** der Kraftstofftank (1) von einer ersten Stirnwand (11) begrenzt ist, die in Einbaulage normal zur Fahrtrichtung angeordnet ist, und die erste Pumpe (6) nahe der ersten Stirnwand (11) angeordnet ist.

6. Kraftstofftankvorrichtung nach Anspruch 1,
**dadurch gekennzeichnet, dass** die erste Pumpe (6) eine Saugstrahlpumpe ist.

7. Kraftstofftankvorrichtung nach Anspruch 1,
**dadurch gekennzeichnet, dass** die zweite Pumpe (12) im Bereich des Bodens (14) des Kraftstofftanks (1) angeordnet ist.

8. Kraftstofftankvorrichtung nach Anspruch 5,
**dadurch gekennzeichnet, dass** der Kraftstofftank (1) an dessen der ersten Stirnwand (11) gegenüberliegenden Seite durch eine zweite Stirnwand (15) begrenzt ist, die in Einbaulage normal zur Fahrtrichtung angeordnet ist, und die zweite Pumpe (12) nahe der zweiten Stirnwand (15) angeordnet ist.

9. Kraftstofftankvorrichtung nach Anspruch 1,
**dadurch gekennzeichnet, dass** die Entnahmeeinheit (4) eine Kraftstoffpumpe (16) umfasst und die erste Pumpe (6) über die Kraftstoffpumpe (16) der Entnahmeeinheit (4) antreibbar ist.

10. Kraftstofftankvorrichtung nach Anspruch 1,
**dadurch gekennzeichnet, dass** die Entnahmeeinheit (4) eine Rücklaufleitung (17) umfasst, über welche von der Entnahmeeinheit (4) dem Kraftstoffreservoir (2) entnommener Kraftstoff in das Kraftstoffreservoir (2) rückführbar ist.

11. Kraftstofftankvorrichtung nach Anspruch 10,
**dadurch gekennzeichnet, dass** die erste Pumpe (6) über die Rücklaufleitung (17) der Entnahmeeinheit (4) betreibbar ist.

12. Kraftstofftankvorrichtung nach Anspruch 1,
**dadurch gekennzeichnet, dass** das Kraftstoffreservoir (2) an der ersten Schwallwand (8) befestigt ist, insbesondere ausschließlich an der ersten Schwallwand (8) befestigt ist.

## Claims

1. Fuel tank device for a commercial vehicle, comprising
- a fuel tank (1),
- a fuel reservoir (2) which is arranged in the interior of the fuel tank (1), wherein an inflow means (3) is arranged on the fuel reservoir (2) and is designed to permit fuel to flow from the fuel tank (1) into the fuel reservoir (2), but to prevent fuel from flowing out of the fuel reservoir (2) into the fuel tank (1),
- an extraction unit (4) which is designed to extract fuel from the fuel reservoir (2) and to supply same to a drive unit (5),
- a filling pipe (9) which extends from a filler neck (23) as far as the fuel reservoir (2) and is designed to permit direct filling of the fuel reservoir (2) from outside the fuel tank (1),
- a first pump (6) which is arranged in the fuel tank (1) outside the fuel reservoir (2) and is designed to feed fuel from the fuel tank (1) into the fuel reservoir (2) via a first supply line (7),
- a first substantially vertically arranged baffle (8) which is arranged outside the fuel reservoir (2) and within the fuel tank (1), wherein the first pump (6) is arranged in a region of the fuel tank (1) that is separated from the fuel reservoir (2) by the first baffle (8),
- a second substantially vertically arranged baffle (18) which is arranged outside the fuel reservoir (2) and within the fuel tank (1), wherein the fuel reservoir (2) is arranged between the first baffle (8) and the second baffle (18),
- a second pump (12) which is arranged in the fuel tank (1) outside the fuel reservoir (2) and is designed to feed fuel from the fuel tank (1) into the fuel reservoir (2) via a second supply line (13), wherein
- the second pump (12) is arranged in a region of the fuel tank (1) that is separated from the fuel reservoir (2) by the second baffle (18).

2. Fuel tank device according to Claim 1, **characterized in that** the inflow means (3) is arranged in the region of the bottom (10) of the fuel reservoir (2).

3. Fuel tank device according to Claim 1, **characterized in that** the inflow means (3) is a mushroom valve.

4. Fuel tank device according to Claim 1, **characterized in that** the first pump (6) is arranged in the region of the bottom (14) of the fuel tank (1).

5. Fuel tank device according to Claim 1, **characterized in that** the fuel tank (1) is bounded by a first end wall (11) which, in the fitted position, is arranged normally with respect to the direction of travel, and the first pump (6) is arranged in the vicinity of the first end wall (11).

6. Fuel tank device according to Claim 1, **characterized in that** the first pump (6) is a sucking jet pump.

7. Fuel tank device according to Claim 1, **characterized in that** the second pump (12) is arranged in the region of the bottom (14) of the fuel tank (1).

8. Fuel tank device according to Claim 5, **characterized in that** the fuel tank (1) is bounded on its side opposite the first end wall (11) by a second end wall (15) which, in the fitted position, is arranged normally with respect to the direction of travel, and the second pump (12) is arranged in the vicinity of the second end wall (15).

9. Fuel tank device according to Claim 1, **characterized in that** the extraction unit (4) comprises a fuel pump (16), and the first pump (6) can be driven via the fuel pump (16) of the extraction unit (4).

10. Fuel tank device according to Claim 1, **characterized in that** the extraction unit (4) comprises a return line (17) via which fuel extracted from the fuel reservoir (2) by the extraction unit (4) can be returned into the fuel reservoir (2).

11. Fuel tank device according to Claim 10, **characterized in that** the first pump (6) can be operated via the return line (17) of the extraction unit (4).

12. Fuel tank device according to Claim 1, **characterized in that** the fuel reservoir (2) is fastened to the first baffle (8), in particular is fastened exclusively to the first baffle (8).

## Revendications

1. Dispositif de réservoir de carburant pour un véhicule utilitaire, comprenant :
- un réservoir de carburant (1),
- un récipient de carburant (2), qui est disposé à l'intérieur du réservoir de carburant (1), un moyen d'afflux (3) étant disposé au niveau du récipient de carburant (2), lequel est prévu pour permettre un afflux de carburant hors du réservoir de carburant (1) dans le récipient de carburant (2), mais pour empêcher une fuite de carburant hors du récipient de carburant (2) dans le réservoir de carburant (1),
- une unité de prélèvement (4) qui est prévue pour prélever du carburant hors du récipient de carburant (2) et pour l'acheminer à une unité d'entraînement (5),
- un tube de remplissage (9) qui s'étend depuis une tubulure de remplissage (23) jusqu'au récipient de carburant (2) et qui est prévu pour permettre un remplissage direct du récipient de carburant (2) depuis l'extérieur du réservoir de carburant (1),
- une première pompe (6) qui est disposée à l'extérieur du récipient de carburant (2) dans le réservoir de carburant (1) et qui est prévue pour refouler par le biais d'une première conduite d'alimentation (7) du carburant hors du réservoir de carburant (1) dans le récipient de carburant (2),
- une première paroi de déflection (8) disposée essentiellement verticalement, qui est disposée à l'extérieur du récipient de carburant (2) et à l'intérieur du réservoir de carburant (1), la première pompe (6) étant disposée dans une région du réservoir de carburant (1) qui est séparée du récipient de carburant (2) par la première paroi de déflection (8),
- une deuxième paroi de déflection (18) disposée essentiellement verticalement, qui est disposée à l'extérieur du récipient de carburant (2) et à l'intérieur du réservoir de carburant (1), le récipient de carburant (2) étant disposé entre la première paroi de déflection (8) et la deuxième paroi de déflection (18),
- une deuxième pompe (12) qui est disposée à l'extérieur du récipient de carburant (2) dans le réservoir de carburant (1) et qui est prévue pour refouler par le biais d'une deuxième conduite d'alimentation (13) du carburant hors du réservoir de carburant (1) dans le récipient de carburant (2),
- la deuxième pompe (12) étant disposée dans une région du réservoir de carburant (1) qui est séparée par la deuxième paroi de déflection (18) du récipient de carburant (2).

2. Dispositif de réservoir de carburant selon la revendication 1,
**caractérisé en ce que** le moyen d'afflux (3) est disposé dans la région du fond (10) du récipient de carburant (2).

3. Dispositif de réservoir de carburant selon la revendication 1,
**caractérisé en ce que** le moyen d'afflux (3) est une soupape à champignon.

4. Dispositif de réservoir de carburant selon la revendication 1,
**caractérisé en ce que** la première pompe (6) est disposée dans la région du fond (14) du réservoir de carburant (1).

5. Dispositif de réservoir de carburant selon la revendication 1,
**caractérisé en ce que** le réservoir de carburant (1) est limité par une première paroi frontale (11) qui, dans la position installée, est disposée perpendiculairement à la direction d'avance, et la première pompe (6) est disposée à proximité de la première paroi frontale (11).

6. Dispositif de réservoir de carburant selon la revendication 1,
**caractérisé en ce que** la première pompe (6) est une pompe à jet aspirant.

7. Dispositif de réservoir de carburant selon la revendication 1,
**caractérisé en ce que** la deuxième pompe (12) est disposée dans la région du fond (14) du réservoir de carburant (1).

8. Dispositif de réservoir de carburant selon la revendication 5,
**caractérisé en ce que** le réservoir de carburant (1) est limité au niveau de son côté opposé à la première paroi frontale (11) par une deuxième paroi frontale (15) qui, dans la position installée, est disposée perpendiculairement à la direction d'avance, et la deuxième pompe (12) est disposée à proximité de la deuxième paroi frontale (15).

9. Dispositif de réservoir de carburant selon la revendication 1,
**caractérisé en ce que** l'unité de prélèvement (4) comprend une pompe à carburant (16) et la première pompe (6) peut être entraînée par le biais de la pompe à carburant (16) de l'unité de prélèvement (4).

10. Dispositif de réservoir de carburant selon la revendication 1,
**caractérisé en ce que** l'unité de prélèvement (4) comprend une conduite de retour (17) par le biais de laquelle le carburant prélevé du récipient de carburant (2) par l'unité de prélèvement (4) peut être ramené dans le récipient de carburant (2).

11. Dispositif de réservoir de carburant selon la revendication 10,
**caractérisé en ce que** la première pompe (6) peut être entraînée par le biais de la conduite de retour (17) de l'unité de prélèvement (4).

12. Dispositif de réservoir de carburant selon la revendication 1,
**caractérisé en ce que** le récipient de carburant (2) est fixé à la première paroi de déflection (8), en particulier est fixé exclusivement à la première paroi de déflection (8).
